Europäisches Patentamt

European Patent Office

Office européen des brevets

(19)

(11) Publication number: **0 105 849**
**A2**

(12) # EUROPEAN PATENT APPLICATION

(21) Application number: **83850233.4**

(22) Date of filing: **31.08.83**

(51) Int. Cl.³: **B 60 R 9/04**

(30) Priority: **08.09.82 NL 8203504**

(43) Date of publication of application:
**18.04.84 Bulletin 84/16**

(84) Designated Contracting States:
**AT BE CH DE FR GB IT LI SE**

(71) Applicant: **Industri AB Thule**
**Box 69**
**S-330 33 Hillerstorp(SE)**

(72) Inventor: **van der Wouden, Adriaan**
**Dorpstraat 25**
**NL-4851 CJ Ulvenhout(NL)**

(74) Representative: **Linde, Leif**
**Vernamo Patentbyrå AB P.O. Box 1**
**S-270 11 Abbekas(SE)**

(54) **Load carrier.**

(57) A load carrier for vehicles comprises at least one girder (1) extending across the body of the vehicle and being provided near its end with a support (3) and a clamping member (6). The clamping member (6) is coupled in a movable manner with an intermediate element (9) pivotable with respect to the support (3). A stretching element (13) is operatively connected between the support or the girder and the clamping member.

Fig.2.

Croydon Printing Company Ltd.

EP 0 105 849 A2

Load carrier.
------------------------------------------------------------

The invention relates to a load carrier comprising at least one girder extending across the body of a vehicle and being provided near its end with a support adapted to be placed on the body and with a clamping member movable with respect to said support.

The object of the invention is to improve a load carrier of the kind set forth in a manner such that it is suitable for use on any type of vehicle. It is known that the roof of a private car may be provided with a rain gutter in which the load carrier is supported and on which it is clamped. Other types of private cars do not have such a rain fillet so that other supports have hitherto been required.

The load carrier according to the invention is distinguished in that the clamping member is movably coupled with an intermediate element which is pivotable with respect to the support, whilst a stretching element is operative between the support or the girder respectively and the clamping member.

The construction proposed now permits, after the disposition of the support, of first urging the clamping member by means of the stretching element against the body and subsequently by continuing stretching, of causing the element to perform a movement in the direction of the girder along the support. In this way the clamping member can be clamped tight to any shape of motor body, that is to say, below the rain fillet, below the top side of a door opening, around the flap of the luggage hold and so on.

In a preferred embodiment the intermediate element is pivotable about a first shaft directed transversely of the girder so that the intermediate element need not be much broader than the width of the girder.

The clamping member may be pivotable about a second shaft parallel to the first shaft and be coupled with the intermediate element. As an alternative the clamping member may furthermore be slidably coupled with the intermediate element.

In order to obtain sufficient clamping force the clamping member is preferably provided with an arm with a nut body extending below the girder for receiving the stretching element in the form of a screw bolt. In this way a compact construction is in this way obtained.

A lockable design is obtained by providing the girder support with an opening for actuating the stretching element, which opening can be closed by a lock bolt member. In this way unauthorized uncoupling of the load carrier is prevented.

In order to adapt the support to different roof lines and roof corners it is provided with a foot pivotable about a third shaft parallel to the first or second shaft. Preferably said foot is constructed in the form of a bridge.

On the other hand it is possible to couple the girder with the support so as to be pivotable about a shaft parallel to the first, second or third axis, the support having, if necessary, the form of a bridge.

The invention furthermore relates to a load carrier of the type set forth in the preamble in which at least the space bounded by the girder supports and the top face of the motor body is filled out with a filler body.

This filler body may be made of elastic material, for example, polyurethane foam, for example, by spray casting, which body reduced the air resistance. This filler body may have a shape matching the streamline of the motor body.

The above-mentioned and further features of the invention will be described more fully with reference to the drawing showing a few embodiments.

The drawing shows in

Fig. 1 a perspective view of the end of a load carrier girder with a support and a clamping member fastened thereto in accordance with the invention,

Fig. 2 a vertical sectional view of the support and clamping member of Fig. 1,

Fig. 3 a side elevation of the support and clamping member of Fig. 1 used on a different form of the motor body,

Figs. 4 and 5 each a vertical sectional view of a second embodiment of a support with a clamping member at the end of a load carrier/girder in a different embodiment in the clamping position and in the open position respectively,

Fig. 6 a side elevation of one half of a load carrier with a support as shown in Fig. 4 and Fig. 5 respectively and an accessory clamped thereto,

Fig. 7 a vertical sectional view of the end of a load carrier/girder with a third embodiment of the support and the clamping member and provided with a filling body,

Fig. 8 a perspective view of a load carrier as shown in Fig. 7 with a modified foot part,

Figs. 9 and 10 two cross-sectional views of the load carrier of Figs. 7 or 8.

Reference numeral 1 designates the girder of a load carrier, The girder may be made of any suitable material and may have a closed or open box-shaped profile depending on the use of the load carrier as a support for accessories or as a transverse beam for an imperial. The end of the girder is rigidly secured by means of a rivet 2 to a support 3, on the underside of which a bridge-shaped foot 4 is pivotable about a shaft 5. The support 3 is made from sheet material so that its hollow space can receive a clamping member 6. This clamping member has the shape of a U, viewed on plan and has a double arm 7 projecting into the housing. On the top side the U-shaped clamping member is pivotally fastened by means of a shaft 8 to an intermediate body 9, which is pivotable about a shaft 10 accommodated in the housing of the support 3. Between the plate arm 7 is arranged atransverse bracket 11 provided with a nut body 12 for receiving a screw bolt 13. The head of the screw bolt is supported in an embossed part 14 of the girder 1.

The clamping member can be varied inlength by means of a telescopic clamping system 15 of known type. On the underside the clamping member is provided with a bent-over flange part 16, which is covered by a soft material.

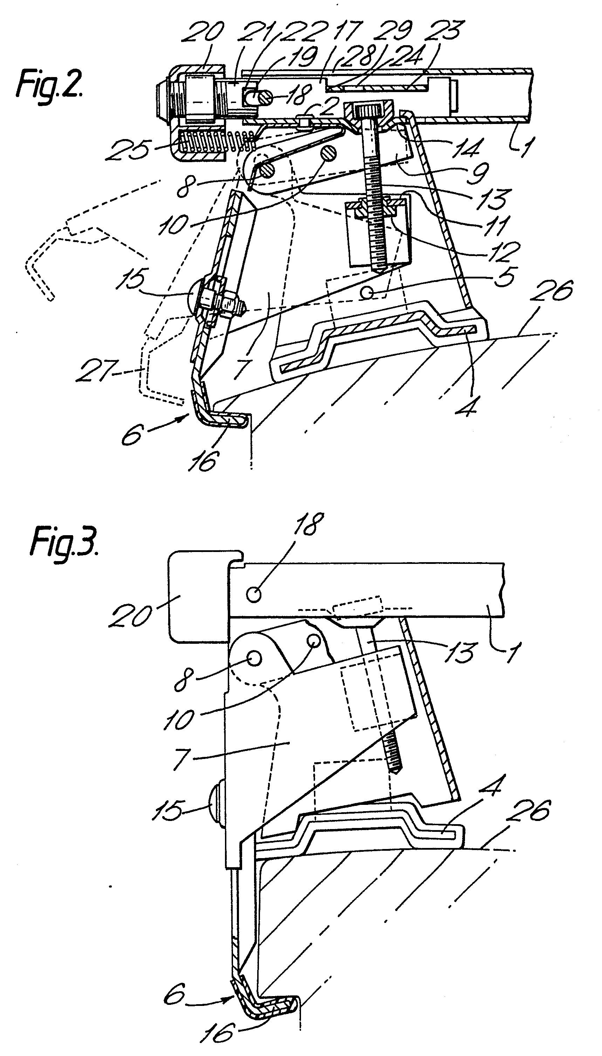

The cavity of the girder 1 accommodates a sliding piece 17, the outermost position of which is bounded by a pin 18 fixed in the side wall of the girder 1 and extending through a slot 19 of the sliding piece 17. The sliding piece is provided at the free end with a lock mechanism 20, the shaft 21 of the lock body having a slot-shaped recess 22. In the position of the shaft 21 shown in Fig. 2 displacement of the sliding piece 17 is possible throughout the length of the slot 19. When the shaft 21 is turned through 90$^o$, the head face of the shaft 21 strikes the pin 18 so that displacement is prevented. On the top side the sliding piece is provided with a depressed wall portion 23 having an opening 24. In the right-hand position of the sliding piece 17 the hole 24 matches the head of the screw bolt 13. Therefore, a key can be passed through the hole 24 into the internal hexagon of the head of the screw bolt so that the bolt can be turned.

A compression spring 25 provides a bias tension on the sliding piece 17, which is thus held on the left in Fig. 2.

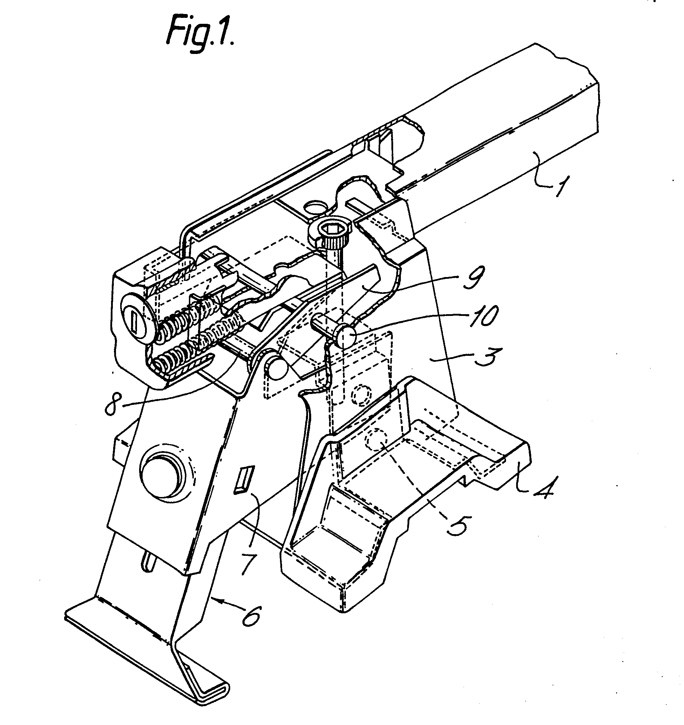

The device shown in Figs. 1 to 3 operates as follows: When the foot 4 is placed on the top side of the motor body (see line 26) the foot 4 will match the shape of the motor body thanks to the pivotal structure around the shaft 5. After the clamping member is set to length by means of the bolt joint 15, the head of the screw bolt 13 is accessible by depressing the sliding piece so that the screw bolt itself can be turned. Thus the arm 7 is drawn upwards so that the clamping member turns about the pin 8 in anti-clockwise direction until the flange 16 falls on the underside of a projecting part of the motor body. When the screw bolt 13 is turned further, the arm 7 is drawn further upwards, which is enabled by the turn of the intermediate element 9 about the pin 10, as a reult of which the point of rotation 8 moves upwards whilst carrying along the clamping member 6. In this way the clamping force between the flange 16 and the foot 4 may already be sufficient. By withdrawing the tool from the head of the screw bolt 13 the sliding piece 17 snaps back by the action of the spring 25, after which the user locks the sliding piece 17 by turning the lock shaft 21.

It should be noted that the top side of the girder 1 may have a slot 28 through which accessories can be passed, said accessories being clamped tight by means of the rim 29 of the depressed portion of the sliding piece 17.

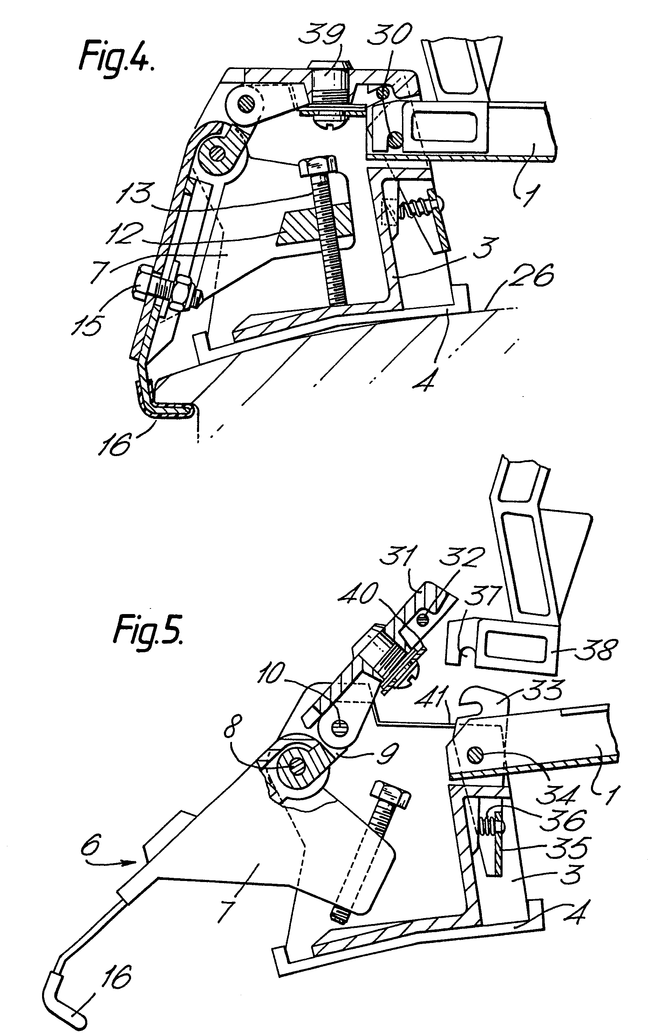

Now the embodiment shown in Figs. 4 and 5 will be described. Parts having a corresponding function are designated by the same reference numerals as in the embodiment described above.

In this embodiment the girder 1 is coupled with the support 3 so as to be pivotable about a shaft 30. The support itself is provided on the underside with a bridge-shaped foot part 4 rigidly secured thereto.

The clamping member 6 is rotatable about the pin 8 and fastened to the intermediate element 9, which is pivotable about a pin 10, which is rigidly held in the foot 3. The clamping member 6 is constructed in the same manner as in the embodiment of Fig. 1 and has a telescopic part, which can be fixed in place by means of a bolt joint 15. The lower end is provided with a flange 16 covered by a protective coating. The clamping member is furthermore provided with an arm 7 to which a screw body 12 is rigidly secured for receiving a
screw bolt 13.

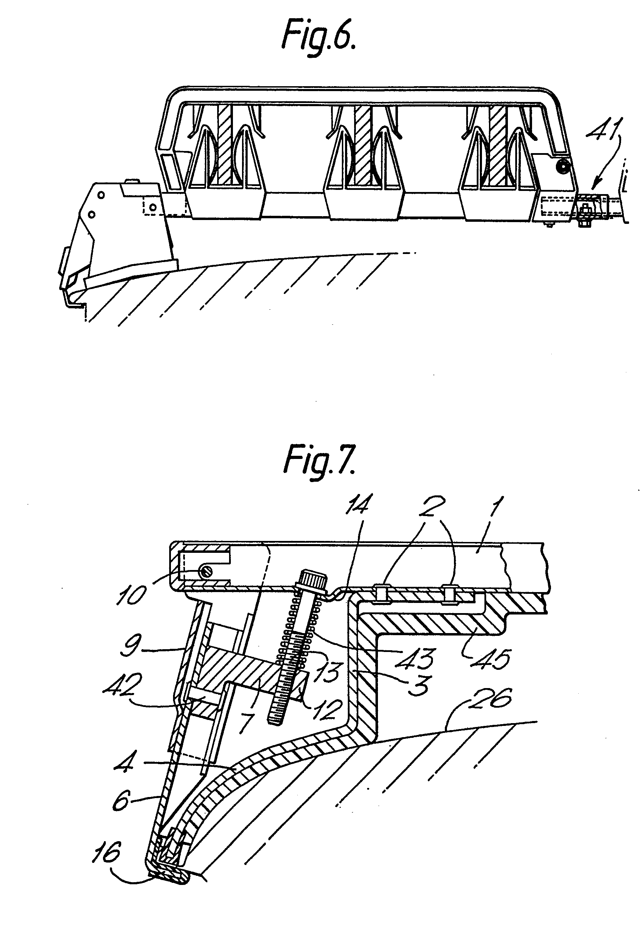

On the top side the foot 3 has a hood 31, which can also turn
about the pin 10. The hood is provided with a lock pin 32, which
can be received by the recess of a lock bolt 33. The lock bolt 33 is
pivotable about a shaft 3 and secured in the foot 3. On the other
side of the shaft 34 the lock bolt 33 is provided with a pressing
piece 35, which is urged away from the foot 3 by means of a spring 36.
The shaft 34 furthermore serves to receive a recess 37 of the foot 38
of an accessory to be disposed on the girder 1 (see Fig. 6), which
accessory lies otherwise beyond the scope of this invention. The hood
31 is proportioned so that after disposition the foot 38 of, the accessory is covered and simultaneously locked in place by the lock bolt 33,
which locked position can be blocked by a lock mechanism 39. For this
purpose the lock has a tongue 40 which can be turned behind a rim 41
of the housing 3.

This embodiment operates as follows.

When the support 3 is disposed on the roof line 26 of a
motor body it will automatically adapt its position by turning about the
pin 34, whilst the bridge-shaped foot part 4 ensures a firm disposition.
In the position in Fig. 5, in which the clamping member 6 is previously
brought to its correct length, the clamping member 7 will first turn
about the pin 8, when the clamping member 6 is manually turned back to
near the motor body and subsequently the bolt 13 is tightened, since
the arm 7 is drawn upwards. Then the bolt 13 bears on the bottom of the
support 3. The bolt is accessible by turning the hood 31 upwards about
the pin 10.

As soon as the flange 16 has touched the motor body the arm 7 will carry upwards the clamping member 6 owing to the reactive force produced by further turning the bolt 13, whilst the intermediate body 9 turns in clockwise direction about the pin 10. In this way adequate clamping force is produced for a firm fixation of the support 3 to the motor body. Subsequently the hood 31 can be pressed down so that the lock bolt 33 snaps around the pin 32. By turning the lock tongue 40 the hood 31 can be blocked. If necessary, the foot of the accessory may be previously disposed as shown in Fig. 4.

Fig. 6 shows the left-hand part of a load carrier with accessories formed in this case by a ski carrier lying beyond the scope of the invention. The left-hand part can be displaced with respect to the right-hand part of the load carrier by means of a telescopic clamping structure 41, which is considered to be known. It will be obvious that the right-hand side of the load carrier may be equipped with a foot part as described above, though this is not required.

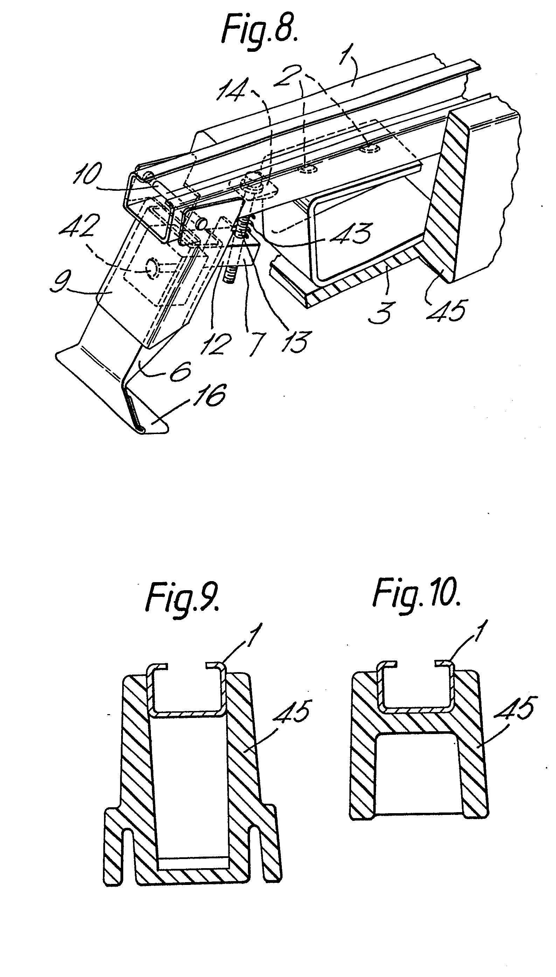

Figs. 7 and 8 show a third embodiment of the support of a load carrier. The girder 1 is rigidly secured on the underside to a support 3 by means of rivets 2. On the side of the foot the support has a shape matching the motor body line 26, although if desired a pivotable foot 4 as shown in Fig. 1 may be employed.

In this case the clamping member 6 consists of a U-shaped profile which is slidable in the intermediate element 9. The intermediate element 9 is fastened to the end of the girder 1 so as to be pivotable about the shaft 10. The clamping member 6 has an arm 7 rigidly secured thereto by means of the rivet 42, said arm having a tapped hole 12 for receiving a scfew bolt 13. The head of the bolt 13 bears on an embossed

part 14 in the bottom of the girder 1. At the bottom of the girder is provided a compression spring 43. The clamping member 6 is again provided with a protected flange 16. This simple embodiment operates as follows. When the supports 3 are disposed on the roof line 26, the clamping member 6, in the loosened state, can be turned in anti-clockwise direction about the shaft 10, hilst carrying along the intermediate body 9. As soon as the flange 16 bears on the motor body, a further turn of the bolt 13 causes the arm 7 to move upwards whilst carrying along the clamping member 6 in the sliding guide of the intermediate element 9. In this way the desired clamping position is obtained.

As a matter of course, this embodiment may be extended with the above-mentioned pivotable foot 4 and lock means for locking the head of the bolt 13.

It is noted that in this embodiment the space bounded by the underside of the girder 1, the sides of the support 3 and the side 16 of the motor body can be filled out by a filling body 45. In a cross-section this filling body may have any desired shape (see Figs. 9 and 10). and matches the specific line 26 of the motor body. The filling body consists in this case of a spray-cast material, for example, polyurethane, which is slightly flexible to absorb the load forces of the girder 1 in a vertical sense. Moreover, the outer periphery of the filling body 45 may have any shape matching the streamline. In a preferred embodiment the front and rear parts of the filling body 45 extend as far as beyond the sidewall of the girder 1, which enhances the aesthetic appearance of the entire load carrier.

The invention is not limited to the embodiments described above. Many variations and combinations of the various embodiments described may be used. The filling body 45 may be used in the embodiment of Fig. 1 and Fig. 4.

~~The invention is not limited to the embodiments described~~ above. Many variations and combinations of the various embodiments described may be used. ~~The filling body~~ 45 may be used in the embodiment ~~of Fig. 1 and Fig. 4.~~

## CLAIMS

1.      A load carrier comprising at least one girder extending across the body of a vehicle and being provided near its end with a support capable of being disposed on the motor body and a clamping member movable with respect to said support characterized in that the clamping member (6) is coupled in movable manner with an intermediate element (9) pivotable with respect to the support, a stretching element (13) being operative between the support or girder respectively and the clamping member.

2.      A load carrier as claimed in Claim 1 characterized in that the intermediate element is pivotable about a first shaft directed transversely of the girder.

3.      A load carrier as claimed in Claims 1 and 2 characterized in that the clamping member is coupled with the intermediate element so as to be pivotable about a second shaft parallel to the first shaft.

4.      A carrier as claimed in Claims 1 and 2 characterized in that the clamping member is slidably coupled with the intermediate element.

5.      A load carrier as claimed in Claims 1 to 4 characterized in that the clamping member is provided with an arm with a nut body extending below the girder for receiving the stretching element constructed in the form of a screw bolt.

6.      A load carrier as claimed in Claim 5 characterized in that the girder or the support has an opening for actuating the stretching element, which opening can be closed by a locking member.

7.      A load carrier as claimed in Claims 1 to 6 characterized in that the support is provided with a foot pivotable about a third shaft parallel to the first or the second shaft.

8.      A load carrier as claimed in Claims 1 to 7 characterized in that the support is provided with a bridge-shaped foot.

9.      A load carrier as claimed in anyone of the preceding Claims characterized in that the girder is coupled with the support so as to be pivotable about a shaft parallel to the first, second or third shaft.

10.      A load carrier comprising at least one girder extending across the body of a vehicle and being provided at both ends with a support adapted to be disposed on the motor body and a clamping member movable with respect to said support characterized in that at least the space bounded by the girder, the supports and the top face of the motor body is filled out with a filling body.

11.      A load carrier as claimed in Claim 10 characterized in that the filling body is made from elastic material.

12.      A load carrier as claimed in Claims 10 and 11 characterized in that the material is polyurethane foam.

13.      A load carrier as claimed in Claim 10 having anyone of the features claimed in Claims 1 to 9.

Fig.1.

Fig.2.

Fig.3.

Fig.4.

Fig.5.

## Fig.6.

## Fig.7.

Fig.8.

Fig.9.

Fig.10.